# EUROPEAN PATENT SPECIFICATION

(11) **EP 1 473 611 B1**
(45) Date of publication and mention of the grant of the patent: **11.06.2008**
(21) Application number: 03701875.1
(22) Date of filing: 27.01.2003
(51) Int. Cl.: G05B 23/02

(54) **LOAD FAILURE DIAGNOSIS METHOD AND APPARATUS AND LOAD FAILURE PROCESSING METHOD AND APPARATUS**
LASTAUSFALLDIAGNOSEVERFAHREN UND -VORRICHTUNG UND LASTAUSFALLVERARBEITUNGSVERFAHREN UND -VORRICHTUNG
PROCEDE ET APPAREIL DE DIAGNOSTIC DE DEFAILLANCE DE CHARGE ET PROCEDE ET APPAREIL DE TRAITEMENT DE DEFAILLANCE DE CHARGE

(30) Priority: 04.02.2002 JP 2002026419
(43) Date of publication of application: 03.11.2004
(73) Proprietor: Bosch Automotive Systems Corporation, Tokyo 150-0002 (JP)
(72) Inventor: MATSUZAKI, H., c/o Bosch Automotive Systems Corp., Higashimatsuyama-shi, Saitama 355-8603 (JP); WATANABE, Y., c/o Bosch Automotive Systems Corp., Higashimatsuyama-shi, Saitama 355-8603 (JP); SATO, E., c/o Bosch Automotive Systems Corp., Higashimatsuyama-shi, Saitama 355-8603 (JP); KAWANO, T., c/o Bosch Automotive Systems Corp., Higashimatsuyama-shi, Saitama 355-8603 (JP); KURIHARA, T., c/o Bosch Automotive Systems Corp., Higashimatsuyama-shi, Saitama 355-8603 (JP)
(74) Representative: Schwabe - Sandmair - Marx
(86) International application number: PCT/JP2003/000719
(87) International publication number: WO 2003/067349

(56) References cited:
- EP-A- 0 240 617
- JP-A- 2 287 890
- JP-A- 5 010 473
- JP-A- 62 279 265
- JP-A- 2001 005 521
- US-A- 4 459 819
- US-A- 5 202 813

## Description

The present invention relates to a method and apparatus for diagnosing failure of a load driven by pulse width modulation (PWM) and a method and apparatus for dealing with load failure.

In, for example, an automotive control system that uses an engine control computer to control the ON/OFF operation of various loads such as solenoid valves, motors, lamps and the like, suitable switching elements are provided that operate in response to control outputs from the computer and the so-called pulse width modulation drive method is adopted to turn the switching elements on and off to control the supply of driving current to required loads.

The conventional method used for diagnosing or detecting wire breakage, shorts and other failures in the loads driven and controlled in this manner has been to check whether the voltage at the connection point between each switching element and the associated load varies synchronously with the computer control output and to diagnose load failure based on the check result. Since the voltage at the connection point changes in sync with the operating state of the switching element between zero and a prescribed value determined by the internal resistance of the load and the control circuit side, load failure can be detected by monitoring the voltage at the connection point in sync with the state of the switching element.

For instance, in a system in which the switching element is conductive when the control output is "1" and nonconductive when the control output is "0," when the load is normal, the voltage at the connection point is ground level for a control output of "1" and a prescribed value for a control output of "0." When the load has an electrical discontinuity or short to the ground side, however, the voltage at the connection point does not vary in response to change in the control output between "1" and "0," thus making it possible to diagnose load failure by the foregoing method.

In the case of control that merely ON/OFF operates the load, the time available for the required voltage reading is more than adequate owing to the long nonconductive period of the switching element. Such a method of diagnosing load failure is disclosed in Patent Document 1 for example. The failure diagnosing method disclosed in this document is one that supplies a diagnosing pulse during load driving, compares the integrated value of the surge voltage that the diagnosing pulse produced on the ground terminal side of the load with a prescribed value, and diagnoses failure taking the result of the comparison into account.

However, in the case where a load such as a solenoid valve is dynamically operated by PWM-driving, the time of reading of the connection point voltage level has to be synchronized with the drive pulses. Even when using a computer, this puts a heavy burden on the system software particularly when the fundamental frequency of the PWM drive pulses is high. For example, when the fundamental frequency of the PWM drive pulses is 10 kHz and the output data is "5% nonconductive," the computer reading the level output at the connection point needs to stay in synchronization with the output at 5-microsecond timing. This clearly increases the burden on the system software in comparison with the case of simple ON/OFF driving.

Moreover, in the case of PWM-driving a load, the load driving timing constantly changes, and since cases therefore arise in which detection synchronized therewith becomes extremely difficult, there is a problem in that the load failure diagnosis is difficult to conduct stably and accurately.

US-A-5,202,813 relates to driver devices for controlling a duty ratio control solenoid type valve (referred to as a duty solenoid valve) in order to adjust the flow rate or pressure of a fluid.

A driver device for a duty solenoid valve comprises a pair of transistors and for controlling the excitation current level flowing through the solenoid of the valve, and a transistor for turning on and off the excitation current. The excitation current level is detected via an integrator and A/D converter by a microcomputer. In response to the detected excitation current level, the microcomputer generates a first pulse signal (PWM signal) via OUT3 to control the level of the excitation current to a target level. Further, the microcomputer outputs a second pulse signal via the OUT4 to the transistor to control the duty ratio of the solenoid.

An object of the present invention is therefore to provide a method and apparatus for diagnosing load failure that overcome the foregoing problems of the prior art.

Another object of the present invention is to provide a method and apparatus for diagnosing load failure that enable simple and accurate diagnosis of whether or not a failure has occurred in a PWM-driven load.

Another object of the present invention is to provide a method and apparatus for dealing with load failure which can, in the case of a failure occurring in a PWM-driven load, deal suitably with the load failure.

### DISCLOSURE OF THE INVENTION

In order to achieve the above-mentioned object, there is provided a method for dealing with load failure according to claim 1. In addition, there is provided an apparatus for dealing with load failure according to claim 5.

Advantageous embodiments are defined by the dependent claims.

In order to achieve the foregoing objects, the present invention integrates a voltage signal produced at one end of a load during a period when the load is being PWM-driven, compares a so-obtained integral value with a reference value based on an instantaneous duty ratio of the drive pulses set for PWM, and diagnoses load failure taking the result of the comparison into account. When the load is normal, the integral value has a prescribed relationship with the duty ratio of the voltage signal applied to the load, but when the load is faulty, the integral output does not become the expected value. The nature of the load failure can therefore be diagnosed by assessing the integral value, and the load failure can be suitably dealt with based thereon.

One feature of the present invention resides in the point that a failure diagnosing method for diagnosing whether a PWM-driven load is faulty comprises: a first step of obtaining an integral value of a voltage signal produced at one end of the load by pulse PWM-driving, a second step of determining a reference value taking into account a set duty ratio for the PWM-driving, and a third step of discriminating presence/absence of failure of the load by comparing the integral value and the reference value.

The voltage signal can be a voltage signal produced at one terminal of the load by the PWM-driving. In the third step, whether or not a failure has occurred in the load can be discriminated by comparing the reference value determined taking into account the set duty ratio and the integral value. This is because the instantaneous integral value will be greatly different from the expected value if wire breakage, shorting or other such failure has occurred. Since the present invention is configured to conduct load failure diagnosis based on the integral value of the voltage signal produced at one end of the load by PWM-driving in this manner, it enables failure diagnosis irrespective of whether the load is inductive, i.e., an inductance, because the reading of the signal to be detected does not require synchronization with a prescribed signal.

Another feature of the present invention resides in the point that a failure diagnosing apparatus for diagnosing whether a load that is PWM-driven by drive means is faulty comprises: integrating means for obtaining an integral value of a voltage signal produced at one end of the load by PWM-driving, determining means for determining a reference value for assessing the appropriateness of the integral value taking into account a set duty ratio for the PWM-driving, and discriminating means for discriminating whether the load is faulty by comparing the integral value and the reference value.

Another feature of the present invention resides in the point that in a failure diagnosing method for diagnosing whether a PWM-driven load is faulty, an integral value of a voltage signal produced at one end of the load by PWM-driving is obtained and presence/absence of failure of the load is discriminated by comparing the integral value and a set duty ratio for the PWM-driving.

Another feature of the present invention resides in the point that in a failure diagnosing method for diagnosing whether a PWM-driven load is faulty, detection of whether the load is faulty is conducted asynchronously with a voltage signal produced at one end of the load by PWM-driving.

Another feature of the present invention resides in the point that a method for dealing with load failure applicable for diagnosing whether a PWM-driven load is faulty and dealing therewith comprises: a step of obtaining an integral value of a voltage signal produced at one end of the load by PWM-driving, a step of determining a reference value taking into account a set duty ratio for the PWM-driving, a step of discriminating presence/absence of failure of the load by comparing the integral value and the reference value, and a step of, when it is discriminated that a failure is present in the load, identifying the failure and setting an output signal to the load in accordance with the result of the identification.

Another feature of the present invention resides in the point that an apparatus for dealing with load failure applicable for diagnosing whether a load PWM-driven by drive means is faulty and dealing therewith comprises: integrating means for obtaining an integral value of a voltage signal produced at one end of the load by PWM-driving, determining means for determining a reference value for assessing the appropriateness of the integral value taking into account a set duty ratio for the PWM-driving, discriminating means for discriminating whether the load is faulty by comparing the integral value and the reference value, and means for, when the discriminating means discriminates that the load is faulty, identifying the failure of the load and setting an output signal to the load in accordance with the result of the identification.

Another feature of the present invention resides in the point that in a method for dealing with load failure applicable for diagnosing whether a PWM-driven load is faulty and dealing therewith, failure of the load is identified by monitoring an integral value of a voltage signal produced at one end of the load by PWM-driving and an output signal to the load is set in accordance with the result of the failure identification.

### BRIEF DESCRIPTION OF THE DRAWINGS

Fig. 1 is a block diagram showing a failure diagnosing apparatus that is an embodiment of the present invention.
Fig. 2 is a waveform chart of a control pulse signal in Fig. 1.
Fig. 3 is a waveform chart of a voltage signal in Fig. 1.
Fig. 4 is a graph for explaining the relationship between a duty ratio set in the failure diagnosing apparatus shown in Fig. 1 and the level of a smoothed output voltage.
Fig. 5 is a flowchart showing a failure diagnosing program executed in the failure diagnosing apparatus shown in Fig. 1.
Fig. 6 is a flowchart showing another failure diagnosing program in accordance with the present invention.
Fig. 7 is a detailed flowchart of a failure processing step in Fig. 6.

### BEST MODE OF CARRYING OUT THE INVENTION

An embodiment of the present invention will now be explained with reference to the drawings.

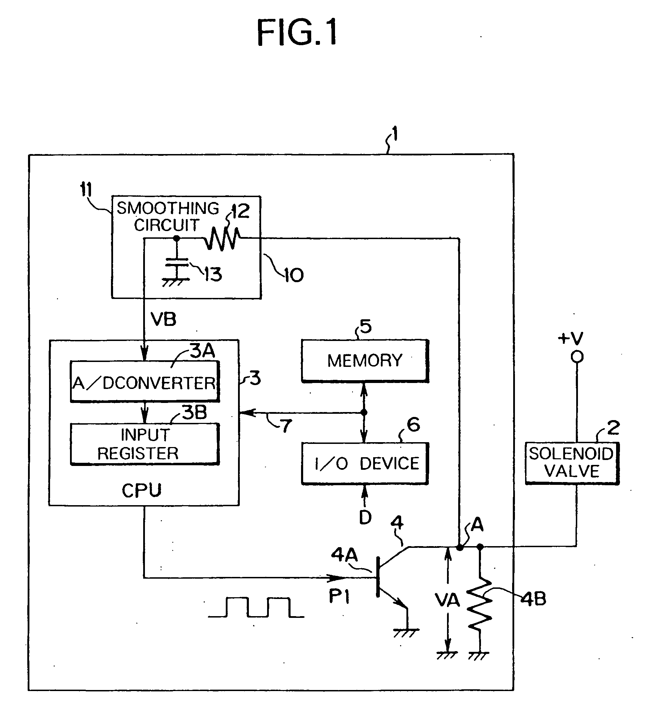

Fig. 1 is a block diagram showing a failure diagnosing apparatus that is an embodiment of the present invention. Reference symbol 1 designates an engine control computer system used to electronically control operation of an automotive engine not shown in the drawings. In the present embodiment, an example is illustrated wherein the load is a solenoid valve 2 for regulating the quantity of fuel supplied to the automotive engine and is driven and controlled in PWM mode by the computer system 1.

The computer system 1 comprises a conventional microcomputer constituted of a central processing unit (CPU) 3, memory 5 and input/output interface device (I/O device) 6 that are interconnected by a bus 7. An engine operation control program stored in the memory 5 is executed by the CPU 3 so as to calculate a controlled variable of the solenoid valve 2 in accordance with operation condition data D input to the CPU 3 through the I/O device 6. Since the so-calculated controlled variable is obtained by driving the solenoid valve 2 by PWM, the CPU 3 outputs a control pulse signal P1 duty-ratio controlled in accordance with the controlled variable calculated in the CPU 3. The control pulse signal P1 is sent to a drive circuit 4, which is a drive means for ON/OFF driving the solenoid valve 2.

The drive circuit 4 consists of a switching transistor 4A and a resistor 4B connected in the illustrated manner, and a solenoid valve 2 is connected between the collector of the switching transistor 4A and a DC power supply +V to configure a conventional circuit for driving the solenoid valve 2. The switching transistor 4A is made conductive or nonconductive in response to the control pulse signal P1, and when the switching transistor 4A is conductive, drive current of a prescribed level required to open the solenoid valve 2 flows to the solenoid valve 2 from the DC power supply +V to put the solenoid valve 2 in the valve-open state. On the other hand, when the switching transistor 4A is nonconductive, substantially no drive current flows through the solenoid valve 2 because the resistance of resistor 4B is considerably greater than the resistance of the drive solenoid (not shown) of the solenoid valve 2, so that the solenoid valve 2 assumes the valve-closed state. Thus, the solenoid valve 2 is applied with a driving voltage signal by the switching means in response to the level of the control pulse signal P1, whereby it is ON/OFF operated to be PWM-driven in accordance with the duty ratio of the control pulse signal P1.

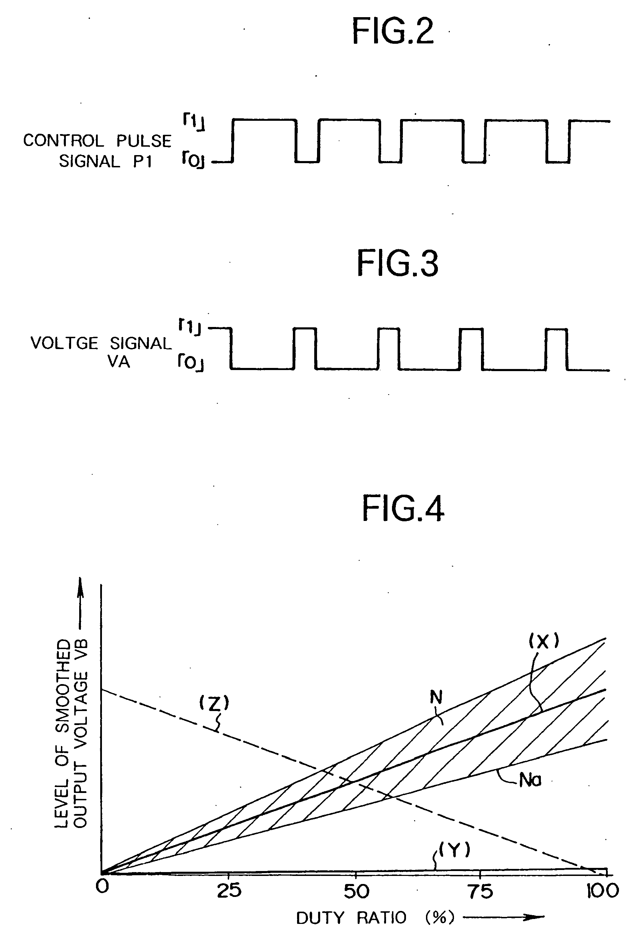

The level of a voltage signal VA produced at the connection point A between the solenoid valve 2 and the collector of the switching transistor 4A therefore varies as shown in Fig. 3 in accordance with the level change of the control pulse signal P1 shown in Fig. 2. Specifically, the voltage signal VA applied to the solenoid valve 2 assumes one state or the other between a 100% duty ratio state when the switching transistor 4A serving as the switching element is constantly nonconductive and a 0% duty ratio state when the switching transistor 4A is constantly conductive. However, when the solenoid valve 2 is electrically discontinuous or shorted, the voltage signal VA stays unchanged at ground level or the power supply voltage level.

The computer system 1 shown in Fig. 1 is equipped with a failure diagnosing unit 10 that utilizes this fact to diagnose the solenoid valve 2. The failure diagnosing unit 10 has a smoothing circuit 11 that is input with the voltage signal VA produced at the connection point A when the solenoid valve 2 is PWM-driven by the control pulse signal P1 in the foregoing manner.

In the embodiment of Fig. 1, the drive circuit 4 is configured using a NPN transistor and is therefore installed between the solenoid valve 2 and ground. The voltage signal VA is therefore a voltage signal at the end of the solenoid valve 2 on the ground side. The drive circuit 4 can, however, instead be configured using a PNP transistor. In this case, the drive circuit 4 is installed between the solenoid valve 2 and the DC power supply +V and a voltage signal produced at the end of the solenoid valve 2 on the side of the DC power supply +V is therefore used as the voltage signal input to the smoothing circuit 11. The smoothing circuit 11 is a circuit for integrating a given input signal, which is constituted as an R-C smoothing circuit that uses a resistor 12 and a capacitor 13 to integrate the voltage signal VA. The level of a smoothed output voltage VB obtained from the smoothing circuit 11 represents the integral value of the voltage signal VA. The smoothed output voltage VB is sent to an analog/digital (A/D) converter 3A in the CPU 3, where its value is digitized, and then stored in an input register 3B.

The relationship between duty ratio of the voltage signal VA and the level of the smoothed output voltage VB will now be explained with reference to Fig. 4.

When pulse current for PWM-driving is flowing in the solenoid valve 2 in response to the control pulse signal P1, the relationship between the duty ratio of the voltage signal VA and the level of the smoothed output voltage VB is linear as shown by characteristic curve (X). When the solenoid valve 2 is faulty, however, this linear relationship no long holds. For example, if the solenoid valve 2 is shorted to ground, the voltage at the connection point A is approximately ground level irrespective of whether the switching transistor 4A is ON or OFF, and since the level of the smoothed output voltage VB therefore stays substantially at zero, the state conforms to characteristic curve (Y). The state also conforms to characteristic curve (Y) when the solenoid valve 2 is electrically discontinuous.

Owing to this relationship between the duty ratio of the voltage signal VA and the level of the smoothed output voltage VB, whether or not the solenoid valve 2 is normal can be diagnosed by checking whether or not the level of the smoothed output voltage VB is at a value proper for the instantaneous duty ratio of the control pulse signal P1, i.e., for the set duty ratio for the PWM-driving.

In order to carry out this failure diagnosis of the solenoid valve 2 based on the aforesaid relationship between the level of the smoothed output voltage VB and the duty ratio of the control pulse signal P1, the smoothed output voltage VB is processed in the CPU 3 as set out in the following. It should be noted that since the voltage signal VA and control pulse signal P1 are opposite in polarity, as can be seen from Figs. 2 and 3, the relationship between the duty ratio of the control pulse signal P1 and the smoothed output voltage VB conforms to characteristic curve (Z) represented by a broken line in Fig. 4. In the failure diagnosing program explained in the following, therefore, the assessment of the result of comparing the level value of the smoothed output voltage VB and the set duty ratio (duty ratio of the control pulse signal P1) is made taking into account the inverted relationship between the characteristic curves (X) and (Y) in Fig. 4. Specifically, the program is structured to once convert the set duty ratio to the duty ratio of the voltage signal VA and then assess whether the relationship between the result of the conversion and the level of the smoothed output voltage VB conforms to the characteristic curve (X) of Fig. 4.

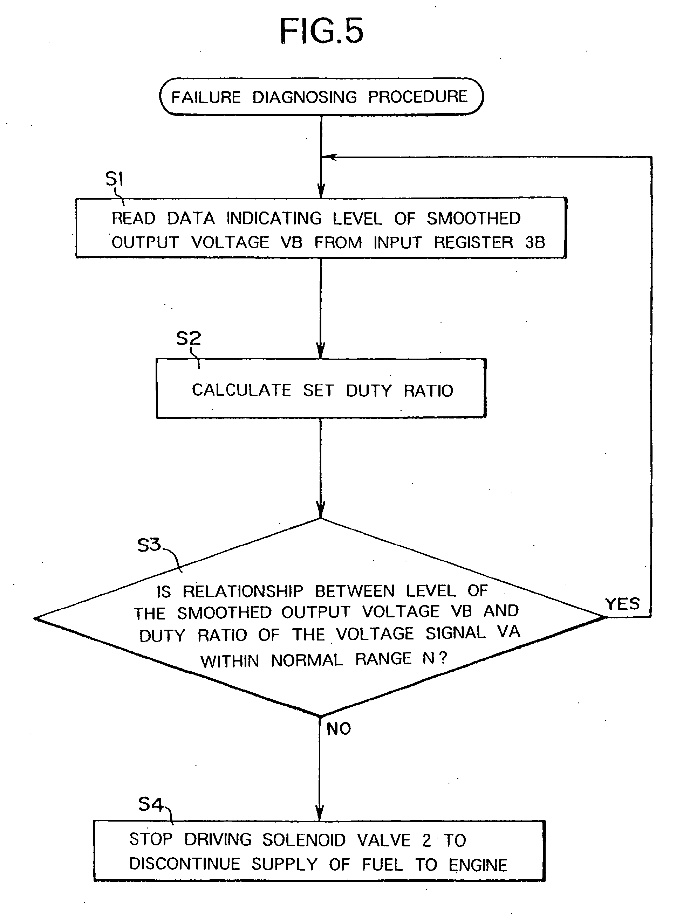

Fig. 5 is a flowchart showing the sequence of failure diagnosing operations executed in the CPU 3. The failure diagnosing operations in the CPU 3 are conducted by programmed computer processing performed by executing a failure diagnosing program stored in the memory 5 beforehand. Fig. 5 is a flowchart representing the failure diagnosing program.

First, in step S1, data indicating the level value of the smoothed output voltage VB obtained from the A/D converter 3A is read from the input register 3B. Next, in step S2, a set duty ratio for PWM-driving the solenoid valve 2 is calculated based on the control pulse signal P1 output at that instant. Then in step S3, discrimination is conducted as to whether the level value of the smoothed output voltage VB read in step S 1 and duty ratio of the voltage signal VA obtained based on the set duty ratio calculated in step S2 conform to the prescribed characteristic curve (X) shown in Fig. 4. This discrimination determines whether the solenoid valve 2 is faulty from whether or not the relationship between the two is within a prescribed normal range N centered on the characteristic curve (X) of Fig. 4.

When the relationship between the level value of the smoothed output voltage VB and the duty ratio of the voltage signal VA is in the normal range N shown in Fig. 4, the result of the discrimination in step S3 is YES and control is returned to step S1 to repeat the processing of steps S1 - S3.

When the relationship between the level value of the smoothed output voltage VB and the duty ratio of the voltage signal VA is not in the normal range N, the result of the discrimination in step S3 is NO, i.e., it is decided that a failure has occurred in the solenoid valve 2, and control passes to step S4. In the case where, for instance, a partially shorted condition such as a layer short is present inside the solenoid valve 2, the relationship between the level value of the smoothed output voltage VB and the duty ratio of the voltage signal VA will shift markedly away from the normal range N in Fig. 4 in the direction opposite from characteristic curve (Y). The same is true in the case of a power supply short. In step S4, failure countermeasures are implemented to stop driving the solenoid valve 2 and discontinue supply of fuel to the engine (not shown), wherewith the failure diagnosing program is terminated.

The failure diagnosing unit 10 discriminates the solenoid valve 2 to be normal if the solenoid valve 2 is being PWM-driven at the set duty ratio in accordance with the control pulse signal P1. However, when wire breakage, shorting or the like occurs in the solenoid valve 2, the level of the smoothed output voltage VB from the smoothing circuit 11 fails to become the proper value for the required duty ratio and failure of the solenoid valve 2 can be detected from this fact. Thus, the voltage signal VA produced at the terminal portion on the ground side of the solenoid valve 2 during PWM-driving of the solenoid valve 2 is integrated by the smoothing circuit 11, the level of the smoothed output voltage VB that is the so-obtained integral value is compared with a reference value based on the instantaneous set duty ratio and load failure (shorting or wire breakage) is diagnosed from the result of the comparison, from which it follows that there is no restriction on the time at which the level of the connection point A is read for failure diagnosis and, as a result, no great burden is placed on the system software. Moreover, in the case where incipient wire breakage or shorting has arisen in the solenoid valve 2, it can be considered that the level of the smoothed output voltage VB from the smoothing circuit 11 will not be the prescribed value determined by the set duty ratio, so that this kind of failure can also be detected.

The foregoing embodiment was explained with respect to an example in which the PWM-driven load was a solenoid valve. However, the present invention is not limited to failure diagnosis in the case of PWM-driving a solenoid valve but can be similarly applied to diagnose load failures other than solenoid valves, such as motors, various kinds of magnetic actuators and the like.

Next, explanation will be made regarding embodiments of a method and an apparatus for dealing with load failures that use a load failure diagnosing method for diagnosing whether failure has occurred in a PWM-driven load which, as explained in the foregoing, detects whether or not load failure has occurred asynchronously of a voltage signal produced at one end of the load by the PWM-driving, identify load failure by monitoring the integral value of the voltage signal produced at one end of the load, and set an output signal to the load taking the result of the failure identification into consideration.

As was explained regarding Fig. 4, the region between the characteristic curve (Y) and the horizontal axis is a failure region in which the solenoid valve 2 is presumed to be electrically discontinuous or shorted to ground side (hereinafter called the "abnormal region 1"), and the region between the lower boundary Na of the N region and the characteristic curve (Y) is a failure region in which the solenoid valve 2 is presumed to have a quasi short to the ground side (hereinafter called the "abnormal region 2"). Therefore, by monitoring the integral value, any abnormality (failure) that arises in the solenoid valve 2 can be identified and dealt with suitably in light of its nature by setting the output to the solenoid valve 2 taking the result of the identification into account.

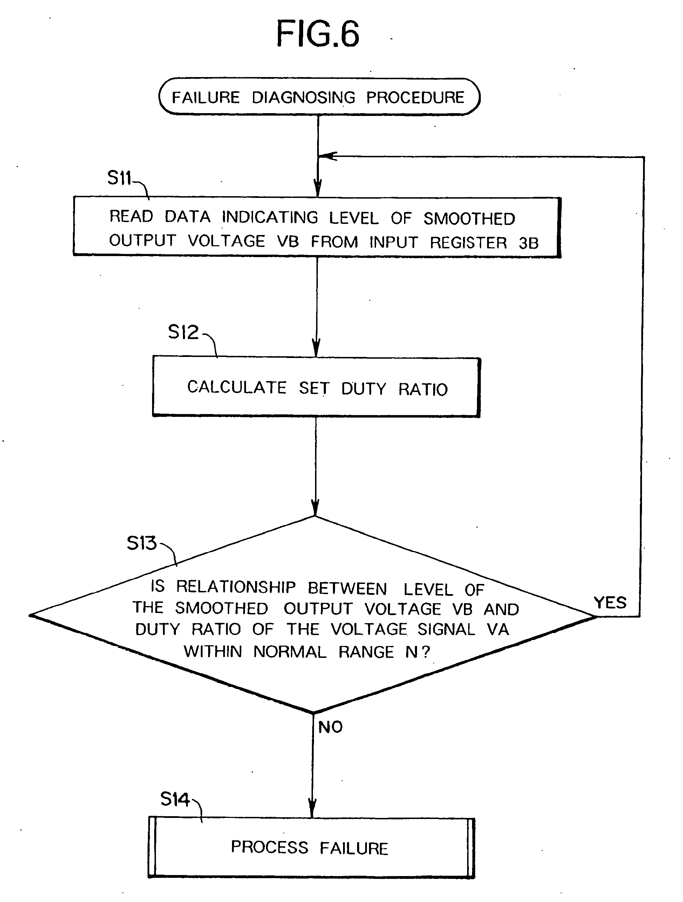

A flowchart representing a separate failure diagnosing program for processing and dealing with failures in this manner is shown in Fig. 6. This failure diagnosing program is also stored in the memory 5 beforehand and executed by the CPU 3 to carry out the operations explained below.

Steps S11-S13 in the flowchart of Fig. 6 correspond to steps S1- S3 of Fig. 5. The explanation of steps S11- S13 will therefore not be repeated here. When the discrimination result in step S13 is NO, i.e., when is found that a failure has arisen in the solenoid valve 2, control goes to the step 14 for dealing with the failure.

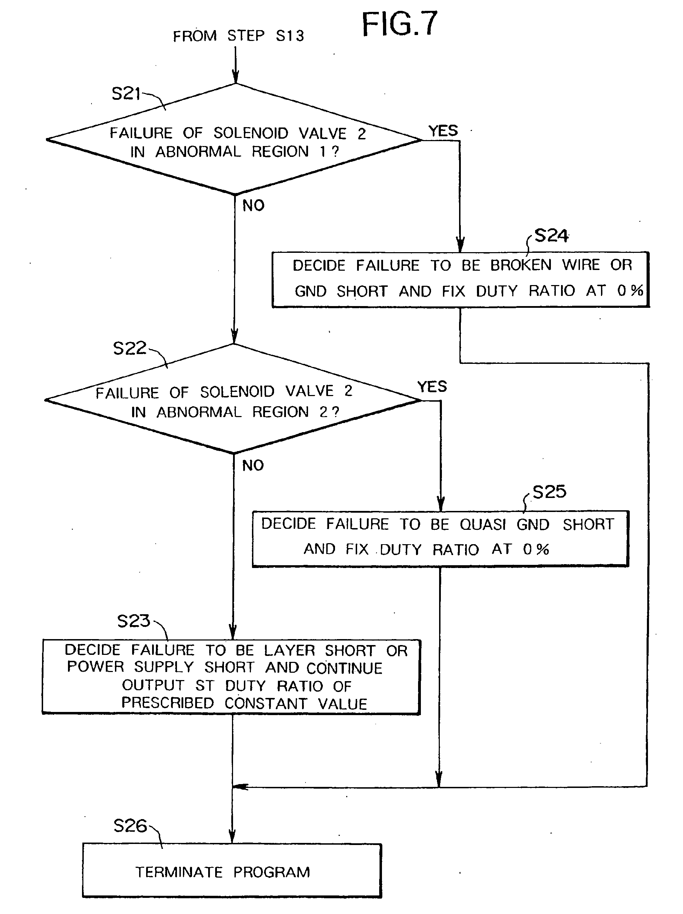

Fig. 7 is a detailed flowchart of the failure processing step. Referring to Fig. 7, first, in step S21, it is discriminated whether the failure of the solenoid valve 2 is in abnormal region 1. When the failure of the solenoid valve 2 is in abnormal region 1, the result in step S21 is YES and control passes to step S24. In step S24, the failure is decided to be a broken wire or GND short and the failure is dealt with by fixing the duty ratio of the control pulse signal P1 at 0%, whereafter the program is terminated (S26).

When step S21 finds that the failure of the solenoid valve 2 is not in abnormal region 1, the discrimination result in step S21 is NO, and control passes to step S22.

In step S22, it is discriminated whether the failure of the solenoid valve 2 is in abnormal region 2.

When the failure of the solenoid valve 2 is found to be in abnormal region 2 in step S22, the result in step S22 is YES and control passes to step S25. In step S25, the failure is decided to be a quasi GND short and the failure is dealt with by fixing the duty ratio of the control pulse signal P1 at 0%, whereafter the program is terminated (S26).

When step S22 finds that the failure of the solenoid valve 2 is not in abnormal region 2, the result in step S21 is NO, and control passes to step S23.

In step S23, taking into account the fact that the discrimination results in both steps S21 and S22 were NO, it is decided that the failure of the solenoid valve 2 is a partially shorted condition such as a layer short present inside the solenoid valve or a power supply short and the output of the control pulse signal P1 is set to be continued at a duty ratio of a prescribed constant value, whereafter the program is terminated (step 26).

The manner of setting the duty ratio with respect to the output signal in steps S23, S24 and S25 shown Fig. 7 is only an example. The present invention is not limited to this example and other settings are also possible. For example, step S25 can be configured to fix the duty ratio at a level that does not overheat the switching transistor 4A, instead of fixing it at 0%.

The failure processing performed in step S14 enables the solenoid valve 2 to be driven in accordance with the nature of the failure, in contrast to the failure processing of indiscriminately stopping the driving of the solenoid valve 2 performed in step S4 of Fig. 5, and, as such, enables driving of the solenoid valve 2, the load, to be continued even when it malfunctions, so that the vehicle can run under its own power.

Since, as explained in the foregoing, the present invention is configured to diagnose a load failure based on the integral value of the pulse signal applied to the load, it enables failure diagnosis irrespective of whether the load is inductive, i.e., an inductance, because the reading of the signal to be detected does not require synchronization with a prescribed signal. As this means there is no restriction on the timing of the signal level readout required for diagnosis, no great burden is placed on the system software during computer processing. As a result, simple and accurate failure diagnosis can be achieved even when the drive timing of the load changes constantly owing to PWM-driving of the load. Moreover, the load failure is identified and the output is set accordingly, thereby enabling realistic load driving within the limit dictated by the nature of the failure.

### INDUSTRIAL APPLICABILITY

The methods according to the present invention for diagnosing load failure and dealing with load failure contribute to the improvement of systems for diagnosing and dealing with load failures because, as explained in the foregoing, they make it possible to conduct load failure diagnosis asynchronously of a voltage signal produced at one end of the load and to take appropriate measures in response.

## Claims

1. A method for dealing with load failure applicable for diagnosing whether a PWM-driven load (2) is faulty and dealing therewith comprising:
a step of obtaining an integral value (VB) of a voltage signal (VA) produced at one end of the load (2) by PWM-driving;
a step of determining a reference value;
a step of discriminating presence/absence of failure of the load (2) by comparing the integral value (VB) and the reference value; and
a step of, when it is discriminated that a failure is present in the load (2), identifying the failure and setting an output signal to the load (2) in accordance with the result of the identification,
**characterized by**
taking into account a set duty ratio for the PWM-driving.

2. The method as claimed in claim 1, wherein detection of whether the load (2) is faulty is conducted asynchronously with a voltage signal (VA) produced at one end of the load (2) by PWM-driving.

3. The method as claimed in claim 1, wherein identification of the failure is conducted based on a result of comparing the integral value (VB) and the reference value.

4. The method as claimed in claim 1, wherein failure of the load (2) is identified by monitoring an integral value (VB) of a voltage signal (VA) produced at one end of the load (2) by PWM-driving and an output signal to the load (2) is set in accordance with the result of the failure identification.

5. An apparatus for dealing with load failure applicable for diagnosing whether a load (2) PWM-driven by drive means is faulty and dealing therewith comprising:
integrating means for obtaining an integral value (VB) of a voltage signal (VA) produced at one end of the load (2) by PWM-driving;
determining means for determining a reference value for assessing the appropriateness of the integral value;
discriminating means (10) for discriminating whether the load (2) is faulty by comparing the integral value (VB) and the reference value; and
means for, when the discriminating means (10) discriminates that the load (2) is faulty, identifying the failure of the load (2) and setting an output signal to the load (2) in accordance with the result of the identification,
**characterized by**
means for taking into account a set duty ratio for the PWM-driving.

## Patentansprüche

1. Verfahren zum Umgang mit Lastausfall, anwendbar zur Diagnostik, ob eine PWM-angesteuerte Last (2) fehlerhaft ist, und zum Umgang damit, wobei das Verfahren umfasst:
einen Schritt des Erhaltens eines integralen Werts (VB) eines Spannungssignals (VA), das an einem Ende der Last (2) durch PWM-Ansteuern erzeugt wird;
einen Schritt des Festlegens eines Referenzwerts;
einen Schritt des Unterscheidens zwischen Vorliegen/Nichtvorliegen eines Ausfalls der Last (2) durch Vergleichen des integralen Werts (VB) und des Referenzwerts; und
wenn durch Unterscheidung festgestellt worden ist, dass ein Ausfall in der Last (2) vorliegt, einen Schritt des Identifizierens des Ausfalls und des Setzens eines Ausgangssignals an die Last (2) in Übereinstimmung mit dem Ergebnis der Identifikation,
**gekennzeichnet durch**
das Berücksichtigen eines festgelegten Tastverhältnisses für das PWM-Ansteuern.

2. Verfahren nach Anspruch 1, wobei die Detektion, ob die Last (2) fehlerhaft ist, mit einem Spannungssignal (VA) asynchron durchgeführt wird, das an einem Ende der Last (2) durch PWM-Ansteuem erzeugt wird.

3. Verfahren nach Anspruch 1, wobei die Identifikation des Ausfalls auf Grundlage eines Ergebnisses aus dem Vergleich des integralen Werts (VB) und des Referenzwerts vorgenommen wird.

4. Verfahren nach Anspruch 1, wobei der Ausfall der Last (2) identifiziert wird durch Überwachen eines integralen Werts (VB) eines Spannungssignals (VA), das an einem Ende der Last (2) durch PWM-Ansteuem erzeugt wird, und ein Ausgangssignal an die Last (2) in Übereinstimmung mit dem Ergebnis der Ausfallidentifikation gesetzt wird.

5. Vorrichtung zum Umgang mit Lastausfall, anwendbar zur Diagnostik, ob eine durch Ansteuerungsmittel PWM-angesteuerte Last (2) fehlerhaft ist, und zum Umgang damit, wobei die Vorrichtung umfasst:
Integrationsmittel zum Erhalten eines integralen Werts (VB) eines Spannungssignals (VA), das an einem Ende der Last (2) durch PWM-Ansteuem erzeugt wird;
Festlegungsmittel zum Festlegen eines Referenzwerts zwecks Beurteilung der Angemessenheit des integralen Werts;
Unterscheidungsmittel (10) zum Unterscheiden, ob die Last (2) fehlerhaft ist, durch Vergleichen des integralen Werts (VB) und des Referenzwerts; und
wenn das Unterscheidungsmittel (10) durch Unterscheidung feststellt, dass die Last (2) fehlerhaft ist, Mittel zum Identifizieren des Ausfalls der Last (2) und Setzen eines Ausgangssignals an die Last (2) in Übereinstimmung mit dem Ergebnis der Identifikation,
**gekennzeichnet durch**
Mittel, welche ein festgelegtes Tastverhältnis für das PWM-Ansteuern berücksichtigen.

## Revendications

1. Procédé pour faire face à une défaillance de charge, applicable pour diagnostiquer si, oui ou non, une charge (2) excitée par modulation PWM est défaillante et faire face à cela, comprenant :
une étape consistant à obtenir une valeur intégrale (VB) d'un signal de tension (VA) produit à une extrémité de la charge (2) par excitation par modulation PWM;
une étape consistant à déterminer une valeur de référence ;
une étape consistant à distinguer la présence/l'absence de défaillance de la charge (2) en comparant la valeur intégrale (VB) et la valeur de référence ; et
une étape consistant, lorsqu'il est distingué qu'une défaillance est présente dans la charge (2), à identifier la défaillance et établir un signal de sortie (2) en fonction du résultat de l'identification,
**caractérisé par**
la prise en compte d'un facteur de marche donné pour l'excitation par modulation PWM.

2. Procédé selon la revendication 1, dans lequel la détection de ce que, oui ou non, la charge (2) est défaillante est menée d'une manière asynchrone par rapport à un signal de tension (VA) produit par excitation par modulation PWM à une extrémité de la charge (2).

3. Procédé selon la revendication 1, dans lequel l'identification de la défaillance est menée d'après un résultat d'une comparaison de la valeur intégrale (VB) et de la valeur de référence.

4. Procédé selon la revendication 1, dans lequel la défaillance de la charge (2) est identifiée en contrôlant une valeur intégrale (VB) d'un signal de tension (VA) produit par excitation par modulation PWM à une extrémité de la charge (2), et un signal de sortie vers la charge (2) est établi d'après le résultat de l'identification de défaillance.

5. Dispositif pour faire face à une défaillance de charge, applicable pour diagnostiquer si, oui ou non, une charge (2) excitée par modulation PWM par un moyen d'excitation est défaillante et faire face à cela, comprenant :
un moyen d'intégration pour obtenir une valeur intégrée (VB) d'un signal de tension (VA) produit par excitation par modulation PWM à une extrémité de la charge (2) ;
un moyen de détermination pour déterminer une valeur de référence pour évaluer le caractère approprié de la valeur intégrale ;
un moyen de distinction (10) pour distinguer si, oui ou non, la charge (2) est défaillante en comparant la valeur intégrale (VB) et la valeur de référence ; et
un moyen pour, lorsque le moyen de distinction (10) distingue que la charge (2) est défaillante, identifier la défaillance de charge (2) et établir un signal de sortie vers la charge d'après le résultat de l'identification,
**caractérisé par**
un moyen pour prendre en compte un facteur de marche donné pour l'excitation par modulation PWM.
